# EUROPÄISCHE PATENTSCHRIFT

(11) **EP 3 147 159 B1**
(45) Veröffentlichungstag und Bekanntmachung des Hinweises auf die Patenterteilung: **22.11.2023**
(21) Anmeldenummer: 16189778.0
(22) Anmeldetag: 20.09.2016
(51) Int. Cl.: B60Q 1/14, B60Q 1/50

(54) **VERFAHREN ZUM BETREIBEN EINES SCHEINWERFERS EINES KRAFTFAHRZEUGS UND KRAFTFAHRZEUG**
METHOD FOR OPERATING A HEADLIGHT OF A MOTOR VEHICLE AND HEADLIGHT FOR A MOTOR VEHICLE
PROCÉDÉ DE FONCTIONNEMENT D'UN PHARE DE VÉHICULE AUTOMOBILE ET VÉHICULE AUTOMOBILE

(30) Priorität: 21.09.2015 DE 102015012020
(43) Veröffentlichungstag der Anmeldung: 29.03.2017
(73) Patentinhaber: AUDI AG, 85045 Ingolstadt (DE)
(72) Erfinder: Funk, Christian, 92339 Beilngries (DE); Barmeyer, Florenz, 02763 Zittau (DE); Armbruster, Tilman, 85055 Ingolstadt (DE); Reim, Johannes, 85072 Eichstätt (DE); Omerbegovic, Said, 65933 Frankfurt (DE)
(74) Vertreter: Lindner Blaumeier Patent- und Rechtsanwälte

(56) Entgegenhaltungen:
- EP-A1- 2 689 966
- EP-A1- 2 740 632
- WO-A1-2015/090516
- DE-A1-102014 000 935
- US-A1- 2008 198 372
- US-A1- 2014 085 470
- US-A1- 2014 218 212

## Beschreibung

Die Erfindung betrifft ein Verfahren zum Betreiben eines Scheinwerfers eines Kraftfahrzeug, welcher mittels aus Bilddaten ermittelten Steuersignalen zum Anstrahlen einer Projektionsfläche angesteuert wird, wobei die Bilddaten wenigstens ein auf der Projektionsfläche durch den Scheinwerfer zu erzeugendes Bild beschreiben.

Scheinwerfer moderner Fahrzeuge stellen für deren Benutzer ein wichtiges Ausstattungsmerkmal zur Steigerung des Bedienkomforts des Kraftfahrzeugs dar. Dabei werden sie nicht mehr nur zur bloßen Ausleuchtung der Fahrzeugumgebung eingesetzt, sondern auch um eine Projektionsfläche, wie eine Projektionswand, mit einem Bild anzustrahlen. Dazu werden aus das zu erzeugende Bild beschreibenden Bilddaten Steuersignale generiert, mit denen die Beleuchtungseinrichtungen zum Anstrahlen der Projektionsfläche angesteuert wird.

So ist es bekannt, den Scheinwerfer im stehenden Zustand des Kraftfahrzeugs als Projektor für Bilddaten zu verwenden. Dabei wird eine Projektionswand durch den Scheinwerfer zur Unterhaltung eines in der Umgebung des Kraftfahrzeugs befindlichen Benutzers angestrahlt, wozu eine Verarbeitungseinheit vor dem Betrieb des Scheinwerfers die Bilddaten über ein Netzwerk oder eine Benutzerschnittstelle erhält. Dies stellt jedoch einen sehr aufwendigen Weg der Bilddatenübertragung dar, da ein die Bilddaten enthaltender Datenträger umständlich mit dem Kraftfahrzeug zur Übertragung aller darzustellenden Bilddaten verbunden werden muss. Mithin wird der gesamte Nutzungskomfort des Scheinwerfers erheblich geschmälert.

Aus EP 2 689 966 A1 ist ein Projektionssystem eines Kraftfahrzeugs bekannt, mittels dem Informationsdarstellungen auf eine Projektionsfläche, etwa eine Straße oder eine Rückwand eines vorausfahrenden Lastkraftwagens, projizierbar sind. Hierzu umfasst das Kraftfahrzeug einen Projektor, mittels dem die Informationsdarstellungen derart vorverzerrt werden, dass diese aus Fahrersicht unverzerrt erscheinen. Die Informationsdarstellungen können von Daten abhängen, die von einem Mobiltelefon bereitgestellt werden.

DE 10 2014 000 935 A1 offenbart ein Kraftfahrzeug mit mehreren Projektoren zur dreidimensionalen Beleuchtung einer Umgebung des Kraftfahrzeugs. Die verzerrungsfrei dargestellten Inhalte können grafische Warnsignale oder Kommunikationssignale sein. Im Kontext dieser Beleuchtung ist auch die Nutzung eines Smartphones denkbar.

In WO 2015/ 090 516 A1 ist eine Fahrzeugbeleuchtungsvorrichtung zum Beleuchten einer Fahrzeugumgebung eines Fahrzeugs beschrieben. Zu diesem Zweck wird ein Fahrzeugscheinwerfer mit einer Mehrzahl von steuerbaren Lichtsegmenten von einer Steuerungseinheit angesteuert, um eine Beleuchtungskulisse zu erzeugen. Die Beleuchtungskulisse kann beispielsweise einen Namen oder mehrere Zeichen oder dergleichen sein oder betreffen. Der Nutzer kann mittels einer Bluetooth-Schnittstelle Bilddaten zum Erzeugen einer Beleuchtungskulisse vorgeben.

Weitere Beleuchtungsvorrichtungen von Kraftfahrzeugen sind aus US 2014 / 0 085 470 A1, US 2014 / 0 218 212 A1, EP 2 740 632 A1 sowie US 2008 / 0 198 372 A1 bekannt.

Der Erfindung liegt die Aufgabe zugrunde, eine komfortablere Möglichkeit zum Betreiben eines Scheinwerfers eines Kraftfahrzeugs anzugeben.

Diese Aufgabe wird mittels eines Verfahrens mit den Merkmalen des Anspruchs 1 gelöst.

Die Erfindung beruht auf der Überlegung, für die Übertragung von Bilddaten an das Kraftfahrzeug ein Datenkommunikationsgerät, insbesondere ein Mobiltelefon, ein Smartphone oder einen Tablet-PC, zu nutzen, welches ein Benutzer des Kraftfahrzeugs typischerweise bei sich trägt. Bevorzugt wird dazu kraftfahrzeugseitig eine Kommunikationseinrichtung verwendet, welche mit einer zum Ermitteln der den Scheinwerfer ansteuernden Steuersignalen aus den Bilddaten ausgebildeten Bildverarbeitungseinrichtung verbunden ist. Dabei ist es sowohl denkbar, dass die Bilddaten in einer Speichereinheit der Bildverarbeitungseinrichtung abgelegt und von dort zur Erzeugung der Steuersignale abgerufen werden oder alternativ durch sogenanntes "Streaming" in Echtzeit, gegebenenfalls unter Verwendung von Pufferspeichern, vom Datenkommunikationsgerät an die Bildverarbeitungseinrichtung übertragen werden. Zweckmäßigerweise wird dazu auf dem Datenkommunikationsgerät ein Computerprogramm, insbesondere eine nachinstallierte "App" verwendet, mittels welcher die darzustellenden Bilder übertragen und/oder zur Darstellung auf der Projektionsfläche ausgewählt werden können. Es ist aber auch möglich, dass die auf der Projektionsfläche zu erzeugenden Bilder durch den Benutzer mittels einer kraftfahrzeugseitigen Mensch-Maschine-Schnittstelle, beispielsweise einem grafischen Ein- und Ausgabegerät, ausgewählt werden.

Es wird ein Scheinwerfer verwendet, der eine Vielzahl, insbesondere wenigstens zehntausend, einzeln ansteuerbare Scheinwerferpixel abstrahlen kann und sich so besonders für die Erzeugung eines durch Bilddaten beschriebenen Bilds auf der Projektionsfläche eignet. Üblicherweise werden derartige Scheinwerfer lediglich als adaptives Fernlicht zum Aussparen von andere Verkehrsteilnehmer blendenden Ausschnitten des Ausleuchtbereichs verwendet. Erfindungsgemäß ist vorgesehen, dass der Scheinwerfer eine Vielzahl einzeln ansteuerbarer Scheinwerferpixel umfasst und als adaptives Fernlicht zum Aussparen von anderen Verkehrsteilnehmern blendenden Abschnitten des Ausleuchtbereichs ausgebildet ist. Als Projektionsfläche können sowohl der Fahrbahnuntergrund im Fahrzeugvorfeld als auch eine frontseitig angeordnete Wand, beispielsweise einer Garage, in der das Kraftfahrzeug geparkt ist, oder eine Gebäudewand, verwendet werden.

Es ist mithin erfindungsgemäß vorgesehen, dass die das zu erzeugende Bild beschreibenden Bilddaten vom tragbaren Datenkommunikationsgerät an das Kraftfahrzeug, insbesondere über die Kommunikationseinrichtung an seine Bildverarbeitungseinrichtung, übertragen werden. Dabei kann der Bilddatenstrom zunächst vollständig übertragen werden und in einer Speichereinheit der Bildverarbeitungseinrichtung abgelegt werden. Aus den abgespeicherten Bilddaten oder einem, ggf. gepufferten, kontinuierlichen Datenstrom der Bilddaten vom Datenkommunikationsgerät zur Bildverarbeitungseinrichtung werden sodann erfindungsgemäß die Steuersignale für den Scheinwerfer generiert, mit denen insbesondere eine Vielzahl an abstrahlbaren Scheinwerferpixeln aktiviert bzw. deaktiviert oder hinsichtlich einer Modifikation ihrer Helligkeit und/oder Farbe angesteuert werden. Schließlich kann die Projektionsfläche durch den Scheinwerfer angestrahlt und das durch die Bilddaten beschriebene Bild auf der Projektionsfläche dargestellt werden.

Vorteilhafterweise fällt so ein aufwendiges mechanisches Kontaktieren des Datenkommunikationsgeräts mit der Kommunikationseinrichtung weg. Zudem werden ohnehin durch das Datenkommunikationsgerät realisierte Übertragungsfunktionen für einen Transfer der Bilddaten zum Kraftfahrzeug genutzt, so dass der Benutzer ohne zusätzlichen Hardwareaufwand ein individuell ausgewähltes Bild mittels des Scheinwerfers auf der Projektionsfläche erzeugen lassen kann. Dem Benutzer wird mithin ein wesentlich komfortablerer Betrieb des Scheinwerfers eröffnet, insbesondere durch eine Personalisierung des abzustrahlenden Bildes.

Es ist im Rahmen des erfindungsgemäßen Verfahrens zum einen denkbar, dass wenigstens ein Einzelbild beschreibende Bilddaten verwendet werden. Dadurch lassen sich statische Schriftzüge oder sogar Fotografien auf der Projektionsfläche darstellen. Es ist aber auch ohne weiteres möglich und bevorzugt, dass eine Bildsequenz beschreibenden Bilddaten verwendet werden. So lassen sich für das menschliche Auge als bewegt wahrnehmbare Bilder, beispielsweise in Form kurzer Videos, darstellen. Die besondere technische Leistungsfähigkeit des Scheinwerfers seines Kraftfahrzeugs kann dem Benutzer so besonders eindrücklich aufgezeigt, mithin erlebbar gemacht, werden.

Es wird bei dem erfindungsgemäßen Verfahren besonders bevorzugt, wenn kraftfahrzeugseitig ein kabelgebundenes Datennetzwerk mit einer Funkschnittstelle verwendet wird, wobei die Bilddaten über die Funkschnittstelle vom Datenkommunikationsgerät empfangen und zur Ermittlung der Steuersignale im Datennetzwerk bereitgestellt werden. Dieses kann beispielsweise auf dem besonders robusten und erprobten Ethernet-Standard basieren, wodurch eine für das Übertragen von Bildsequenzen in Form von Videos ausreichende Übertragungsbandbreite bereitsteht. Bevorzugt wird dabei die Kommunikationseinrichtung zur Realisierung der Funkschnittstelle zwischen dem Datennetzwerk und dem tragbaren Datenkommunikationsgerät verwendet.

Im Rahmen des erfindungsgemäßen Verfahrens ist es darüber hinaus besonders zweckmäßig, wenn die Bilddaten über eine Punkt-zu-Punkt-Funkverbindung oder ein das Datenkommunikationsgerät mit einem oder dem kraftfahrzeugseitigen Datennetzwerk verbindendes Funknetzwerk übertragen werden. Es ist mithin möglich, zwischen dem Datenkommunikationsgerät und der Kommunikationseinrichtung lediglich eine Punkt-zu-Punkt-Funkverbindung, bevorzugt durch Nutzung des Bluetooth-Standards, aufzubauen und darüber die Bilddaten zu übertragen. Es kann aber auch vorgesehen sein, ein lokales Funknetzwerk zur Übertragung der Bilddaten beispielsweise auf Basis eines WLAN-Standards zu errichten. Derartige Übertragungsmöglichkeiten stehen beispielsweise für die Realisierung einer Freisprechfunktion für das Mobiltelefon bereits zur Verfügung, sodass die Bildübertragung vorteilhafterweise ohne nennenswerten Hardwareaufwand implementiert werden kann.

Um besonders hochauflösende Darstellungseigenschaften des Scheinwerfers zu erzielen, ist es bei dem erfindungsgemäßen Verfahren besonders zweckmäßig, wenn ein eine Lichtquelle und eine dieser nachgeschaltete Optikeinheit aufweisender Scheinwerfer verwendet wird, wobei die Optikeinheit mittels der Steuersignale angesteuert wird. Die Optikeinheit erzeugt mithin aus dem durch die Lichtquelle erzeugten Licht eine Lichtverteilung, die auf der Projektionsfläche das Bild erzeugt. Bevorzugt wird als Optikeinheit ein Flüssigkeitskristalldisplay oder eine Mikrospiegelanordnung verwendet. Bei Flüssigkeitskristalldisplays kommt als Optikeinheit eine transparente Aktivmatrix mit einzeln ansteuerbaren Flüssigkeitskristallen zum Einsatz, durch welche nur bestimmte Farb- und/oder Helligkeitsanteile des von der Lichtquelle erzeugten Lichts transmittiert werden. Bei einer Mikrospiegelanordnung, insbesondere einem mikrooptoelektromechanischen Systemen, gelangt das erzeugte Licht auf einzelne, jeweils einen Scheinwerferpixel realisierende, Mikrospiegel. Dabei ist jeder einzelne Spiegel so aktivierbar und deaktivierbar, dass er das Licht zur Erzeugung eines Bildpunkts auf die Projektionsfläche bzw. in eine andere Richtung oder nicht reflektiert. Durch schnelles intermittierendes Aktivieren und Deaktivieren einzelner Mikrospiegel mit einem vorgebbaren Tastverhältnis kann zudem eine für das menschliche Auge wahrnehmbaren Helligkeit einzelner Scheinwerferpixel auf Projektionsfläche variiert werden. Als Lichtquelle kann zudem ein Laser oder eine Leuchtdiode verwendet werden.

Schließlich ist bei dem erfindungsgemäßen Verfahren mit besonderem Vorteil vorgesehen, dass die Steuersignale in Abhängigkeit von eine Position und/oder eine Ausrichtung der Projektionsfläche bezüglich des Kraftfahrzeugs beschreibenden Sensordaten einer das Umfeld des Kraftfahrzeugs erfassenden Sensoreinrichtung derart angepasst werden, dass eine zu erwartende Verzerrung des Bildes beim Anstrahlen der Projektionsfläche durch den Schweinwerfer kompensiert wird. Mithin werden eine Relativposition der Projektionsfläche zum Kraftfahrzeug beschreibende Sensordaten aus einer Umfeldsensorik des Kraftfahrzeugs gewonnen und die zur Ansteuerung der Beleuchtungseinrichtung verwendeten Steuersignale aus den Bilddaten unter zusätzlicher Berücksichtigung dieser Sensordaten erzeugt. Dazu werden zunächst mittels der Sensoreinrichtung die Position und/oder die Ausrichtung der Projektionsfläche bezüglich des Kraftfahrzeugs beschreibende Sensordaten erfasst. Auf die Bilddaten kann beispielsweise ein in Abhängigkeit der Position und/oder Ausrichtung der Projektionsfläche parametrisierter Transformationsalgorithmus angewendet werden, der die Kompensation der beim nicht angepassten Anstrahlen der Projektionsfläche entstehenden Verzerrung bewirkt. Dem Benutzer des Kraftfahrzeugs, insbesondere seinem Fahrer, wird so stets ein verzerrungsfreies, perspektivisch korrektes Bild auf der Projektionsfläche angezeigt.

Daneben betrifft die Erfindung ein Kraftfahrzeug, umfassend einen Scheinwerfer zum Anstrahlen einer Projektionsfläche mit wenigstens einem durch Bilddaten beschriebenen Bild und eine zum Ermitteln von den Scheinwerfer ansteuernden Steuersignalen aus den Bilddaten ausgebildete Bildverarbeitungseinrichtung. Das erfindungsgemäße Kraftfahrzeug weist die Merkmale des Anspruchs 7 auf.

Bei dem erfindungsgemäßen Kraftfahrzeug kann mit Vorteil ein kabelgebundenes Datennetzwerk mit einer durch die Kommunikationseinrichtung realisierten Funkschnittstelle vorgesehen sein, welche dazu ausgebildet ist, die Bilddaten vom Datenkommunikationsgerät der Bildverarbeitungseinrichtung über das Datennetzwerk bereitzustellen.

Daneben wird es bei dem erfindungsgemäßen Kraftfahrzeug bevorzugt, wenn die Kommunikationseinrichtung zum Übertragen der Bilddaten über eine Punkt-zu-Punkt-Funkverbindung oder ein das Datenkommunikationsgerät mit einem oder dem kraftfahrzeugseitigen Datennetzwerk verbindendes Funknetzwerk ausgebildet ist.

Ferner wird es bei dem erfindungsgemäßen Kraftfahrzeug besonders bevorzugt, wenn der Scheinwerfer eine Lichtquelle oder eine dieser nachgeschaltete Optikeinheit aufweist, wobei die Optikeinheit durch die Steuersignale ansteuerbar ist.

Dabei ist es besonders zweckmäßig, wenn die Lichtquelle als ein Laser oder eine Leuchtdiode und/oder die Optikeinheit als ein Flüssigkeitskristalldisplay oder eine Mikrospiegelanordnung ausgebildet ist.

Schließlich ist bei dem erfindungsgemäßen Kraftfahrzeug vorgesehen, dass eine zum Erfassen der Projektionsfläche ausgebildete Sensoreinrichtung vorgesehen ist, wobei die Bildverarbeitungseinrichtung zum Kompensieren einer zu erwartenden Verzerrung des Bildes beim Anstrahlen der Projektionsfläche durch den Scheinwerfer durch Anpassen der Steuersignale in Abhängigkeit von eine Position und/oder eine Ausrichtung der Projektionsfläche bezüglich des Kraftfahrzeugs beschreibenden Sensordaten der Sensoreinrichtung ausgebildet ist.

Sämtliche Ausführungen zum erfindungsgemäßen Verfahren lassen sich analog auf das erfindungsgemäße Kraftfahrzeug übertragen, so dass auch mit diesem die zuvor genannten Vorteile erzielt werden können.

Weitere Vorteile und Einzelheiten der Erfindung ergeben sich aus dem im Folgenden beschriebenen Ausführungsbeispiel sowie anhand der Zeichnung. Dabei zeigt die Figur eine schematische Darstellung eines erfindungsgemäßen Kraftfahrzeugs vor einer Projektionsfläche.

In der Figur ist eine schematische Darstellung eines Kraftfahrzeugs 1, welches vor einer Projektionsfläche 2 angeordnet ist. Das Kraftfahrzeug 1 umfasst einen Scheinwerfer 3, eine Bildverarbeitungseinrichtung 4, eine Sensoreinrichtung 5 sowie eine Kommunikationseinrichtung 6.

Der Scheinwerfer 3 weist eine Lichtquelle 7, beispielsweise in Form eines Lasers oder einer Leuchtdiode, sowie eine dieser nachgeschaltete Optikeinheit 8 auf, welche durch von der Bildverarbeitungseinrichtung 4 erzeugte Steuersignale zur Veränderung einer hochauflösenden, abstrahlbaren Lichtverteilung 9 ansteuerbar ist. Die Optikeinheit 8 ist als Mikrospiegelanordnung ausgebildet und umfasst mehrere einhunderttausend einzeln ansteuerbare Mikrospiegel, die in Abhängigkeit ihrer Ansteuerung das von der Lichtquelle 7 erzeugte Licht in einem aktivierten Zustand auf die Projektionsfläche 2 reflektieren und dort einen Scheinwerferpixel ausleuchten. Ebenso ist jeder Mikrospiegel zu seiner Deaktivierung ansteuerbar, wobei er das Licht nicht auf die Projektionsfläche 2 reflektiert, der Scheinwerferpixel mithin dunkel bleibt. Die Mikrospiegel sind zusätzlich einzeln mit einer hohen Frequenz unter einem Tastverhältnis intermittierend aktivierbar und deaktivierbar, um für das menschliche Auge scheinbare Helligkeitsabstufungen auf der Projektionsfläche 2 zu erzeugen. Alternativ zu einer Mikrospiegelanordnung kann die Optikeinheit 8 auch als Flüssigkeitskristalldisplay ausgebildet sein. In diesem Fall strahl das von der Lichtquelle 7 erzeugte Licht, wie von einem Videoprojektor bekannt, durch eine pixelweise ansteuerbare aktive Flüssigkristallmatrix, wodurch sich ebenso einzeln ansteuerbare Scheinwerferpixel auf der Projektionsfläche 2 erzeugen lassen.

Die Sensoreinrichtung 5 umfasst erfindungsgemäß eine im Inneren des Kraftfahrzeugs 1 verbaute Kamera 10 und einen frontseitig angeordneten Radarsensor 11, deren Sensorinformationen von einer Auswertungseinheit 12 zu die Umgebung des Kraftfahrzeugs 1 beschreibenden Sensordaten fusioniert und der Bildverarbeitungseinrichtung 4 bereitgestellt werden. Dabei beschreiben die Sensordaten die Position und die Ausrichtung der Projektionsfläche 2 zum Kraftfahrzeug 1.

Die Kommunikationseinrichtung 6 ist über ein kabelgebundenes, auf dem Ethernet-Standard basierendes kraftfahrzeugseitiges Datennetzwerk 13 mit der Bildverarbeitungseinrichtung 4 verbunden. Die Kommunikationseinrichtung 6 weist ferner eine durch eine Antenne symbolisierte Funkschnittstelle 14 auf, welche eine drahtlose Verbindung mit einem tragbaren Datenkommunikationsgerät 15 in Form eines Smartphones eines Benutzers 16 des Kraftfahrzeugs 1 ermöglicht. Über die Funkschnittstelle 14 ist eine auf dem Bluetooth-Standard basierende Punkt-zu-Punkt-Funkverbindung zum Übertragen von Bilddaten, die über das Datennetzwerk 13 an die Bildverarbeitungseinrichtung 4 leitbar sind, herstellbar. Alternativ zu einer Punkt-zu-Punkt-Funkverbindung kann das Datenkommunikationsgerät 15 auch über ein lokales Funknetzwerk (WLAN) mit dem Datennetzwerk 13 verbunden sein.

Im Rahmen eines Verfahrens zum Betrieb des Scheinwerfers 3 des Kraftfahrzeugs 1 werden zunächst mehrere Einzelbilder und mehrere Videosequenzen beschreibende Bilddaten vom Datenkommunikationsgerät 15 über die Schnittstelle 14 drahtlos von der Kommunikationseinrichtung 6 empfangen und über das Datennetzwerk 13 in der Bildverarbeitungseinrichtung 4 gespeichert. Ebenso können die Bilddaten als gegebenenfalls gepufferter kontinuierlicher Datenstrom an die Bildverarbeitungseinrichtung 4 übertragen werden ("Streaming"). Der Benutzer 16 kann dabei über eine Mensch-Maschine-Schnittstelle 17 ein Einzelbild oder eine Bildsequenz auswählen, die er durch Anstrahlen der Projektionsfläche 2 mittels des Scheinwerfers 3 erzeugt sehen möchte. Alternativ dazu kann auf dem Datenkommunikationsgerät 14 auch ein Computerprogramm in Form einer "App" installiert sein, über die er eine entsprechende Auswahl vornehmen und Bilddaten an die Bildverarbeitungseinrichtung 4 übertragen kann.

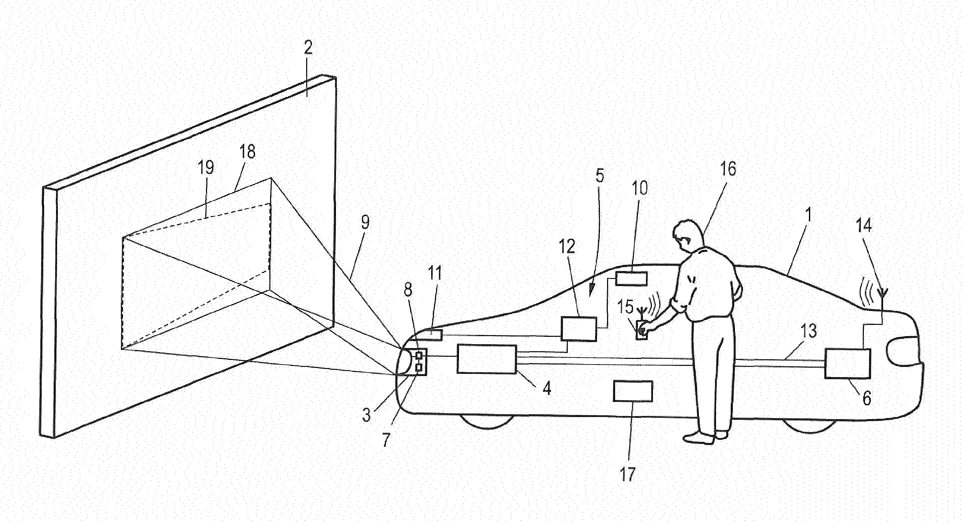

Zur Erzeugung des Bildes 18 wird zunächst aus den fusionierten Sensordaten der Kamera 10 und des Radarsensors 11 die Position und Ausrichtung der Projektionsfläche 2 zum Kraftfahrzeug 1 durch die Bildverarbeitungseinrichtung 4 ermittelt. Nachdem die Projektionsfläche 2, wie aus Fig. 1 ersichtlich, schräg zur Fahrzeugquerachse angeordnet ist, parametrisiert die Bildverarbeitungseinrichtung 4 einen Transformationsalgorithmus, der auf die das Bild 18 beschreibenden Bilddaten angewendet wird, dahingehend dass eine zu erwartende, aus der Schrägstellung der Projektionsfläche 2 resultierende Verzerrung des Bildes 18 kompensiert wird. Im einfachsten Fall wird eine lineare Abbildungsmatrix parametrisiert, die durch Matrixmultiplikation mit den Bilddaten verknüpft wird. Gestrichelt ist dazu ein verzerrtes Bild 19 eingezeichnet, das ohne diese Transformation dargestellt werden würde.

Aus den transformierten Bilddaten erzeugt die Bildverarbeitungseinrichtung 4 schließlich Steuersignale für die Optikeinheit 8 des Scheinwerfers 3, deren Mikrospiegel das von der Lichtquelle 7 emittierte Licht zur Darstellung des Bildes 18 auf die Projektionsfläche 2 reflektieren.

Dem Benutzer 16 wird durch die hochauflösende Darstellung des Bilds 18 die besondere technische Leistungsfähigkeit des hochauflösenden Scheinwerfers 3 verdeutlicht und so ein wesentliches Komfortmerkmal des Kraftfahrzeugs 1 für den Benutzer 16 erlebbar gemacht. Dazu trägt auch bei, dass durch die individuelle Vorgebbarkeit an zu erzeugenden Bilder 18 eine Personalisierung des Betriebs des Scheinwerfers 3 ermöglicht wird.

## Patentansprüche

1. Verfahren zum Betreiben eines eine Vielzahl einzeln ansteuerbarer Scheinwerferpixel umfassenden und als adaptives Fernlicht zum Aussparen von anderen Verkehrsteilnehmern blendenden Ausschnitten des Ausleuchtbereichs ausgebildeten Scheinwerfers (3) eines Kraftfahrzeugs (1), welcher mittels aus Bilddaten ermittelten Steuersignalen zum Anstrahlen einer Projektionsfläche (2) angesteuert wird, wobei die Bilddaten wenigstens ein auf der Projektionsfläche (2) durch den Scheinwerfer (3) zu erzeugendes Bild (18) beschreiben, wobei die Bilddaten von einem tragbaren Datenkommunikationsgerät (15) drahtlos an das Kraftfahrzeug (1) übertragen werden, wobei die Steuersignale in Abhängigkeit von eine Position und/oder eine Ausrichtung der Projektionsfläche (2) bezüglich des Kraftfahrzeugs (1) beschreibenden Sensordaten einer das Umfeld des Kraftfahrzeugs (1) erfassenden Sensoreinrichtung (5) derart angepasst werden, dass eine zu erwartende Verzerrung des Bildes (18) beim Anstrahlen der Projektionsfläche (2) durch den Schweinwerfer (3) kompensiert wird, wobei die Sensoreinrichtung (5) eine im Inneren des Kraftfahrzeugs (1) verbaute Kamera (10) und einen frontseitig angeordneten Radarsensor (11) umfasst, deren Sensorinformationen von einer Auswertungseinheit (12) zu die Umgebung des Kraftfahrzeugs (1) beschreibenden Sensordaten fusioniert und der Bildverarbeitungseinrichtung (4) bereitgestellt werden.

2. Verfahren nach Anspruch 1,
**dadurch gekennzeichnet,**
**dass** wenigstens ein Einzelbild und/oder eine Bildsequenz beschreibende Bilddaten übertragen werden.

3. Verfahren nach Anspruch 1 oder 2,
**dadurch gekennzeichnet,**
**dass** kraftfahrzeugseitig ein kabelgebundenes Datennetzwerk (13) mit einer Funkschnittstelle (14) verwendet wird, wobei die Bilddaten über die Funkschnittstelle (14) vom Datenkommunikationsgerät (15) empfangen und zur Ermittlung der Steuersignale im Datennetzwerk (13) bereitgestellt werden.

4. Verfahren nach einem der vorhergehenden Ansprüche,
**dadurch gekennzeichnet,**
**dass** die Bilddaten über eine Punkt-zu-Punkt-Funkverbindung oder ein das Datenkommunikationsgerät (15) mit einem oder dem kraftfahrzeugseitigen Datennetzwerk (13) verbindendes Funknetzwerk übertragen werden.

5. Verfahren nach einem der vorhergehenden Ansprüche,
**dadurch gekennzeichnet,**
**dass** ein eine Lichtquelle (7) und eine dieser nachgeschaltete Optikeinheit (8) aufweisender Scheinwerfer (3) verwendet wird, wobei die Optikeinheit (8) mittels der Steuersignale angesteuert wird.

6. Verfahren nach Anspruch 5,
**dadurch gekennzeichnet,**
**dass** als Lichtquelle (7) ein Laser oder eine Leuchtdiode und/oder als Optikeinheit (8) ein Flüssigkristalldisplay oder eine Mikrospiegelanordnung verwendet wird.

7. Kraftfahrzeug, umfassend einen eine Vielzahl einzeln ansteuerbarer Scheinwerferpixel umfassenden und als adaptives Fernlicht zum Aussparen von anderen Verkehrsteilnehmern blendenden Ausschnitten des Ausleuchtbereichs ausgebildeten Scheinwerfer (3) zum Anstrahlen einer Projektionsfläche (2) mit wenigstens einem durch Bilddaten beschriebenen Bild (18) und eine zum Ermitteln von den Scheinwerfer (3) ansteuernden Steuersignalen aus den Bilddaten ausgebildete Bildverarbeitungseinrichtung (4), wobei eine zum drahtlosen Übertragen der Bilddaten an das Kraftfahrzeug (1) ausgebildete Kommunikationseinrichtung (6) vorgesehen ist, wobei eine zum Erfassen der Projektionsfläche (2) ausgebildete Sensoreinrichtung (5) vorgesehen ist, wobei die Bildverarbeitungseinrichtung (4) zum Kompensieren einer zu erwartenden Verzerrung des Bildes (18) beim Anstrahlen der Projektionsfläche (2) durch den Scheinwerfer (3) durch Anpassen der Steuersignale in Abhängigkeit von eine Position und/oder eine Ausrichtung der Projektionsfläche (2) bezüglich des Kraftfahrzeugs (1) beschreibenden Sensordaten der Sensoreinrichtung ausgebildet (5) ist, wobei die Sensoreinrichtung (5) eine im Inneren des Kraftfahrzeugs (1) verbaute Kamera (10) und einen frontseitig angeordneten Radarsensor (11) umfasst, deren Sensorinformationen von einer Auswertungseinheit (12) zu die Umgebung des Kraftfahrzeugs (1) beschreibenden Sensordaten fusionierbar und der Bildverarbeitungseinrichtung (4) bereitstellbar sind.

8. Kraftfahrzeug nach Anspruch 7,
**dadurch gekennzeichnet,**
**dass** ein kabelgebundenes Datennetzwerk (13) mit einer durch die Kommunikationseinrichtung (6) realisierten Funkschnittstelle (14) vorgesehen ist, welche dazu ausgebildet ist, die Bilddaten vom Datenkommunikationsgerät (15) der Bildverarbeitungseinrichtung (4) über das Datennetzwerk (13) bereitzustellen.

9. Kraftfahrzeug nach Anspruch 7 oder 8,
**dadurch gekennzeichnet,**
**dass** die Kommunikationseinrichtung (6) zum Übertragen der Bilddaten über eine Punkt-zu-Punkt-Funkverbindung oder ein das Datenkommunikationsgerät (15) mit einem oder dem kraftfahrzeugseitigen Datennetzwerk (13) verbindendes Funknetzwerk ausgebildet ist.

10. Kraftfahrzeug nach einem der Ansprüche 7 bis 9,
**dadurch gekennzeichnet,**
**dass** der Scheinwerfer (3) eine Lichtquelle (7) und eine dieser nachgeschaltete Optikeinheit (8) aufweist, wobei die Optikeinheit (8) durch die Steuersignale ansteuerbar ist.

11. Kraftfahrzeug nach Anspruch 10,
**dadurch gekennzeichnet,**
**dass** die Lichtquelle (7) als ein Laser oder eine Leuchtdiode und/oder die Optikeinheit (8) als ein Flüssigkristalldisplay oder eine Mikrospiegelanordnung ausgebildet ist.

## Claims

1. Method for operating a headlamp (3) of a motor vehicle (1) which comprises a multiplicity of individually controllable headlamp pixels, is designed as an adaptive full beam for cutting out portions of the illuminated region that blind other road users and is controlled by means of control signals which are determined from image data and serve to illuminate a projection surface (2), wherein the image data describe at least one image (18) to be produced on the projection surface (2) by the headlamp (3), wherein the image data are transferred wirelessly to the motor vehicle (1) from portable data communications equipment (15), wherein the control signals are adapted in such a way on the basis of a position and/or an alignment of the projection surface (2) in relation to sensor data describing the motor vehicle (1) from a sensor device (5) detecting the surround of the motor vehicle (1) that an expected distortion of the image (18) when the projection surface (2) is illuminated by the headlamp (3) is compensated for, wherein the sensor device (5) comprises a camera (10) installed in the interior of the motor vehicle (1) and a radar sensor (11) arranged at the front of the motor vehicle, the sensor information of which are fused to form sensor data which describe the surround of the motor vehicle (1) and are provided for the image processing device (4) by an evaluation unit (12).

2. Method according to Claim 1,
**characterized**
**in that** at least one frame and/or image data describing an image sequence are transferred.

3. Method according to Claim 1 or 2,
**characterized**
**in that** a wired data network (13) with a radio interface (14) is used on-board the vehicle, wherein the image data are received from the data communications equipment (15) via the radio interface (14) and are provided for determining the control signals in the data network (13).

4. Method according to any of the preceding claims,
**characterized**
**in that** the image data are transferred via a point-to-point radio connection or a radio network connecting the data communications equipment (15) to a or the data network (13) on-board the vehicle.

5. Method according to any of the preceding claims,
**characterized**
**in that** use is made of a headlamp (3) having a light source (7) and an optics unit (8) downstream thereof, wherein the optics unit (8) is controlled by means of the control signals.

6. Method according to Claim 5,
**characterized**
**in that** a laser or a light-emitting diode is used as light source (7) and/or a liquid crystal display or a micromirror arrangement is used as optics unit (8).

7. Motor vehicle, comprising a headlamp (3) which comprises a multiplicity of individually controllable headlamp pixels, is designed as an adaptive full beam for cutting out portions of the illuminated region that blind other road users and serves to illuminate a projection surface (2) with at least one image (18) described by image data, and comprising an image processing device (4) designed to determine headlamp (3) controlling control signals from the image data, wherein a communications device (6) designed to wirelessly transfer the image data to the motor vehicle (1) is provided, wherein a sensor device (5) designed to detect the projection surface (2) is provided, wherein the image processing device (4) is designed to compensate for an expected distortion of the image (18) when the projection surface (2) is illuminated by the headlamp (3), the compensation being implemented by adapting the control signals on the basis of a position and/or an alignment of the projection surface (2) in relation to sensor data describing the motor vehicle (1) from the sensor device (5), wherein the sensor device (5) comprises a camera (10) installed in the interior of the motor vehicle (1) and a radar sensor (11) arranged at the front of the motor vehicle, the sensor information of which are able to be fused to form sensor data which describe the surround of the motor vehicle (1) and are able to be provided for the image processing device (4) by an evaluation unit (12).

8. Motor vehicle according to Claim 7,
**characterized**
**in that** a wired data network (13) with a radio interface (14) realized by the communications device (6) is provided, said radio interface being designed to provide the image data from the data communications equipment (15) to the image processing device (4) via the data network (13).

9. Motor vehicle according to Claim 7 or 8,
**characterized**
**in that** the communications device (6) is designed to transfer the image data via a point-to-point radio connection or a radio network connecting the data communications equipment (15) to a or the data network (13) on-board the vehicle.

10. Motor vehicle according to any of Claims 7 to 9,
**characterized**
**in that** the headlamp (3) has a light source (7) and an optics unit (8) downstream thereof, wherein the optics unit (8) is controllable by the control signals.

11. Motor vehicle according to Claim 10,
**characterized**
**in that** the light source (7) is designed as a laser or a light-emitting diode and/or the optics unit (8) is designed as a liquid crystal display or a micromirror arrangement.

## Revendications

1. Procédé de fonctionnement d'un phare (3) d'un véhicule automobile (1), qui comprend un grand nombre de pixels de phare commandables individuellement, qui est conçu comme un feu de route adaptatif destiné à éviter que des secteurs de la zone d'éclairage éblouissent les autres usagers de la route et qui est commandé au moyen de signaux de commande déterminés à partir de données d'image afin d'éclairer une surface de projection (2), les données d'image décrivant au moins une image (18) qui doit être générée sur la surface de projection (2) par le phare (3), les données d'image étant transmises sans fil au véhicule automobile (1) par un dispositif de communication de données portable (15), les signaux de commande étant adaptés en fonction de données de capteurs d'un module de détection (5) qui détecte l'environnement du véhicule automobile (1), lesquelles données de capteur décrivent une position et/ou une orientation de la surface de projection (2) par rapport au véhicule automobile (1), de manière à compenser une distorsion attendue de l'image (18) lorsque la surface de projection (2) est éclairée par le phare (3), le module de détection (5) comprenant une caméra (10), installée à l'intérieur du véhicule automobile (1), et un capteur radar (11) qui est disposé à l'avant et dont les informations sont fusionnées par une unité d'évaluation (12) afin de former des données de capteur décrivant l'environnement du véhicule automobile (1) et sont fournies au module de traitement d'images (4).

2. Procédé selon la revendication 1,
**caractérisé en ce que**
des données d'image sont transmises qui décrivent au moins une image individuelle et/ou une séquence d'images.

3. Procédé selon la revendication 1 ou 2,
**caractérisé en ce que**
du côté du véhicule automobile, un réseau de données filaire (13) est utilisé avec une interface radio (14), les données d'image étant reçues par le dispositif de communication de données (15) par le biais de l'interface radio (14) et sont fournies afin de déterminer les signaux de commande dans le réseau de données (13).

4. Procédé selon l'une des revendications précédentes,
**caractérisé en ce que**
les données d'image sont transmises par le biais d'une liaison radio point à point ou d'un réseau radio reliant le dispositif de communication de données (15) à un ou au réseau de données côté véhicule (13).

5. Procédé selon l'une des revendications précédentes,
**caractérisé en ce que**
un phare (3) est utilisé qui comporte une source de lumière (7) et une unité optique (8) montée en aval, l'unité optique (8) étant commandée au moyen des signaux de commande.

6. Procédé selon la revendication 5,
**caractérisé en ce que**
la source de lumière (7) est un laser ou une diode électroluminescente et/ou un affichage à cristaux liquides ou un ensemble de micro-miroirs est utilisé comme unité optique (8) .

7. Véhicule automobile, comprenant un phare (3) qui comprend un grand nombre de pixels de phare commandables individuellement, qui est conçu comme un feu de route adaptatif afin d'éviter que des secteurs de la zone d'éclairage n'aveuglent les autres usagers de la route et qui est destiné à éclairer une surface de projection (2) avec au moins une image (18) décrite par des données d'image, et un module de traitement d'image (4) conçu pour déterminer des signaux de commande, qui commandent les phares (3), à partir des données d'image, un module de communication (6) étant prévu qui est conçu pour transmettre sans fil les données d'image au véhicule automobile (1), un module de détection (5) étant prévu qui est conçu pour détecter la surface de projection (2), le module de traitement d'image (4) étant conçu pour compenser une distorsion attendue de l'image (18), lorsque la surface de projection (2) est éclairée par le phare (3), en adaptant les signaux de commande en fonction des données de capteur du module de détection (5) qui décrivent une position et/ou une orientation de la surface de projection (2) par rapport au véhicule automobile (1), le module de détection (5) comprenant une caméra (10), installée à l'intérieur du véhicule automobile (1), et un capteur radar (11) qui est disposé à l'avant et dont les informations peuvent être fusionnées par une unité d'évaluation (12) afin de former des données de capteur décrivant l'environnement du véhicule automobile (1) et peuvent être fournies au module de traitement d'image (4).

8. Véhicule automobile selon la revendication 7,
**caractérisé en ce que**
un réseau de données filaire (13) est pourvu d'une interface radio (14) qui est réalisée par le module de communication (6) et qui est conçue pour transmettre les données d'image du dispositif de communication de données (15) au module de traitement d'images (4) par le biais du réseau de données (13).

9. Véhicule automobile selon la revendication 7 ou 8, **caractérisé en ce que** le module de communication (6) est conçu pour transmettre les données d'image par le biais d'une liaison radio point à point ou d'un réseau radio reliant le dispositif de communication de données (15) à un ou au réseau de données du véhicule automobile (13).

10. Véhicule automobile selon l'une des revendications 7 à 9,
**caractérisé en ce que**
le phare comporte une source de lumière (7) et une unité optique (8) montée en aval de celle-ci, l'unité optique (8) pouvant être commandée par les signaux de commande.

11. Véhicule automobile selon la revendication 10,
**caractérisé en ce que**
la source de lumière (7) est réalisée sous la forme d'un laser ou d'une diode électroluminescente et/ou l'unité optique (8) est réalisée sous la forme d'un affichage à cristaux liquides ou d'un ensemble de micro-miroirs.
